(19) Europäisches Patentamt / European Patent Office / Office européen des brevets

(11) **EP 3 893 069 A1**

(12) **EUROPÄISCHE PATENTANMELDUNG**

(43) Veröffentlichungstag:
**13.10.2021 Patentblatt 2021/41**

(51) Int Cl.:
**G05B 23/02** (2006.01)   **H04L 12/24** (2006.01)

(21) Anmeldenummer: **20168298.6**

(22) Anmeldetag: **06.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Bierweiler, Thomas
  76131 Karlsruhe (DE)**
• **Grieb, Herbert
  76316 Malsch (DE)**
• **Konigorski, Ulrich
  76646 Bruchsal (DE)**
• **Labisch, Daniel
  76149 Karlsruhe (DE)**
• **Lenz, Eric
  64289 Darmstadt (DE)**

(54) **STATIONÄRE URSACHENANALYSE BEI TECHNISCHEN ANLAGEN**

(57) Vorgeschlagen wird ein Verfahren zur Ermittlung einer Ursache für eine Anomalie beim Betrieb einer technischen Anlage, insbesondere Fertigungs- oder Prozessanlage, umfassend:

a) Bestimmen eines linearen, stationären Modells für wenigstens eine Komponente (1, 2, 3, 4, 5, 6, 7, 8) der technischen Anlage anhand eines topologischen Aufbaus der technischen Anlage, wobei das Modell ein qualitatives Verhalten der Komponente (1, 2, 3, 4, 5, 6, 7, 8) abbildet, derart, dass das Modell eine qualitative Aussage über einen technischen Antwortstrom der Komponente (1, 2, 3, 4, 5, 6, 7, 8) in Reaktion auf einen bestimmten technischen Eingangsstrom, mit dem die Komponente (1, 2, 3, 4, 5, 6, 7, 8) beaufschlagt wird, umfasst,

b) Betreiben der wenigstens einen Komponente (1, 2, 3, 4, 5, 6, 7, 8) der technischen Anlage und Beaufschlagen der Komponente (1, 2, 3, 4, 5, 6, 7, 8) mit einem technischen Eingangsstrom,

c) Empfangen des Antwortstroms und Hinterlegen des Antwortstroms in einem Datenspeicher,

d) Auswerten des in dem Datenspeicher hinterlegten Antwortstroms der Komponente (1, 2, 3, 4, 5, 6, 7, 8),

e) Feststellen einer Anomalie des Antwortstroms der Komponente (1, 2, 3, 4, 5, 6, 7, 8),

f) Ermitteln von möglichen Ursachen für die Anomalie aus einer Verknüpfung der Anomalie mit dem zuvor bestimmten Modell der Komponente (1, 2, 3, 4, 5, 6, 7, 8),

g) Hinterlegen der möglichen Ursachen in dem Datenspeicher.

**Beschreibung**

Die Erfindung betrifft ein Verfahren zur Ermittlung einer Ursache für eine Anomalie beim Betrieb einer technischen Anlage nach Anspruch 1. Zudem betrifft die Erfindung ein Computerprogramm mit durch einen Computer ausführbaren Programmcodeanweisungen nach Anspruch 6. Außerdem betrifft die Erfindung ein Speichermedium mit einem durch einen Computer ausführbaren Computerprogramm nach Anspruch 7 und ein Computersystem nach Anspruch 8.

Eine technische Anlage, insbesondere Fertigungs- oder Prozessanlage, wird in der Regel fortwährend überwacht, um ungünstige Betriebszustände zu vermeiden. Bereits die Erkennung einer Abweichung im Betrieb der technischen Anlage (Anomalieerkennung) liefert hierbei einen Mehrwert, auch wenn die Suche nach einer Ursache für die Anomalie komplett manuell erfolgen muss. Der Mehrwert kann gesteigert werden, wenn auch eine Information darüber vorliegt, welche Komponenten der technischen Anlage auf welche Art und Weise von ihrem Normalverhalten abweichen (Symptomerkennung).

Eine manuelle Suche der Ursache ist mühselig und aufwändig. Es sind daher verschiedene Bestrebungen bekannt, die Ursachen für die Abweichungen automatisch bestimmen zu können, so dass das Anlagenpersonal direkt mit der Behebung der Ursache beginnen kann. Grundsätzlich kann hierbei zwischen zwei Vorgehensweisen unterschieden werden.

Ein erster Lösungsansatz verfolgt eine rein datenbasierte Ursachensuche. Eine Identifizierung der Ursache ist dabei jedoch nur möglich, wenn die Ursache in der Vergangenheit bereits aufgetreten und entsprechend klassifiziert worden ist.

Ein zweiter Lösungsansatz basiert auf Modellen. Dabei wird ausgehend von der Anlagenstruktur der technischen Anlage (bspw. dem Rohrleitungs- & Instrumentenfließschema) ein Modell der technischen Anlage bzw. deren Komponenten erzeugt. Dieses wird anschließend dazu genutzt, erkannten Symptomen mögliche Ursachen zuzuordnen.

Zur Modellierung kommen verschiedenste Verfahren in Frage. In der EP 2568348 A1, der EP 2587328 A1 und der EP 2587329 A1 wird eine derartige Modellierung auf Basis von sogenannten "Signed Digraphs" beschrieben. Hiermit können für vergleichsweise kleine Anlagentopologien (in der Größe einer Forschungsanlage) gute Ergebnisse bei der Ursachenermittlung erzielt werden. Für größere, reale technische Anlage sind die hierin beschriebenen Verfahren jedoch weniger gut geeignet. Insbesondere können Verzweigungen in der Anlagentopologie zu leeren Ursachenmengen oder zu übermäßig vielen möglichen Ursachen führen.

[1] und [2] geben in einer Review einen systematischen Überblick über mögliche Algorithmen zur Ursachenanalyse.

[1] Venkat Venkatasubramanian, Raghunathan Rengaswamy, Kewen Yin, Surya N. Kavuri; A review of process fault detection and diagnosis Part I: Quantitative model-based methods; Computers and Chemical Engineering, issue 27, pp.293-31t,2003.

[2] Venkat Venkatasubramanian, Raghunathan Rengaswamy, Surya N. Kavuri; A review of process fault detection and diagnosis Part II: Qualitative Models and Search Strategies; Computers and Chemical Engineering, issue 27, pp.313-326, 2003.

Allen hierin genannten Verfahren wohnen jedoch eine verhältnismäßig große Komplexität und ein hoher Modellierungsaufwand inne.

Der Erfindung liegt die Aufgabe zugrunde, ein Verfahren zur Ermittlung einer Ursache für eine Anomalie beim Betrieb einer technischen Anlage anzugeben, das effizient und automatisiert durchgeführt werden kann.

Diese Aufgabe wird gelöst durch ein Verfahren zur Ermittlung einer Ursache für eine Anomalie beim Betrieb einer technischen Anlage, insbesondere Fertigungs- oder Prozessanlage, nach Anspruch 1. Außerdem wird die Aufgabe gelöst durch ein Computerprogramm mit durch einen Computer ausführbaren Programmcodeanweisungen nach Anspruch 6. Außerdem wird die Aufgabe gelöst durch ein Speichermedium mit einem durch einen Computer ausführbaren Computerprogramm nach Anspruch 7 und ein Computersystem nach Anspruch 8. Vorteilhafte Weiterbildungen ergeben sich aus den abhängigen Ansprüchen.

Gemäß Anspruch 1 umfasst ein erfindungsgemäßes Verfahren zur Ermittlung einer Ursache für eine Anomalie beim Betrieb einer technischen Anlage, insbesondere Fertigungs- oder Prozessanlage, die folgenden Verfahrensschritte:

a) Bestimmen eines linearen, stationären Modells für wenigstens eine Komponente der technischen Anlage anhand eines topologischen Aufbaus der technischen Anlage, wobei das Modell ein qualitatives Verhalten der Komponente abbildet, derart, dass das Modell eine qualitative Aussage über einen technischen Antwortstrom der Komponente in Reaktion auf einen bestimmten technischen Eingangsstrom, mit dem die Komponente beaufschlagt wird, umfasst,
b) Betreiben der wenigstens einen Komponente der technischen Anlage und Beaufschlagen der Komponente mit einem technischen Eingangsstrom,
c) Empfangen des Antwortstroms und Hinterlegen des Antwortstroms in einem Datenspeicher,
d) Auswerten des in dem Datenspeicher hinterlegten Antwortstroms der Komponente,
e) Feststellen einer Anomalie des Antwortstroms der Komponente,

f) Ermitteln von möglichen Ursachen für die Anomalie aus einer Verknüpfung der Anomalie mit dem zuvor bestimmten Modell der Komponente,

g) Hinterlegen der möglichen Ursachen in dem Datenspeicher.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, wie beispielsweise Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Bei einer Komponente kann es sich beispielsweise um einen Reaktor, eine Pumpe oder ein Ventil handeln. Mit der Bezeichnung "technischer Antwortstrom" wird die Reaktion bzw. die Antwort der Komponente auf die Anregung mit einem "technischen Eingangsstrom" verbunden. Beispielsweise reagiert eine Ventilkomponente auf die Öffnungsbewegung (als technischem Eingangsstrom) des Ventilverschlusses mit einer Erhöhung der durchgelassenen Fluidmenge (als technischem Antwortstrom). Diese Zusammenhänge müssen jedoch nicht quantitativ (Öffnungsbewegung mit 5 cm Hub ergibt eine Durchflusserhöhung um 70%), sondern rein qualitativ bestimmt werden (z.B. "Eine Öffnungsbewegung führt zu einer Erhöhung der Durchflussmenge").

Abstrakt formuliert sind als Eingabe in das erfindungsgemäße Verfahren Gleichungen vorzugeben bzw. zu bestimmen, die das stationäre, lineare Verfahren der wenigstens einen Komponente qualitativ beschreiben. Das wenigstens eine Modell der wenigstens einen Komponente beschreibt mit anderen Worten eine qualitative Kopplung von einzelnen physikalischen / technischen Größen, die die Komponente charakterisieren. Die Informationen zur Bestimmung des Modells werden einem topologischen Aufbau der technischen Anlage entnommen. Dabei handelt es sich insbesondere um ein Rohrleitungs- und Instrumentenfließschema. Bei den hierin enthaltenen Komponenten handelt es sich in der Regel um Standardbauteile, deren prinzipielle (d.h. qualitative) Funktionsweise bekannt ist oder, im Ausnahmefall, durch einfache Versuche bekannt gemacht werden kann.

Nach der Ermittlung des Antwortstroms wird dieser hinsichtlich Anomalien untersucht. Dabei können an sich bekannte Verfahren zur Anomalieerkennung verwendet werden. Diese Anomalien werden anschließend auf geeignete Art und Weise mit dem zuvor bestimmten Modell verknüpft, um so auf mögliche Ursachen, im besten Fall auf nur eine einzige mögliche Ursache, schließen zu können.

Mit dem erfindungsgemäßen Verfahren ist es möglich, nur mit dem Wissen der Anlagenstruktur automatisch ein statisches, qualitatives Modell zu bestimmen, welches die möglichen und modellierten Ursachen auf die Abweichungen des Antwortstroms (Symptome) abbildet. Dieses Verfahren skaliert im Gegensatz zu den zuvor beschriebenen Verfahren gut für größere Anlagentopologien.

Es kann sinnvoll sein, noch weitere Antwortströme basierend auf dem gemessenen, bereits vorhandenen Antwortstrom der Komponente zu definieren. So kann beispielsweise bei fluidischen Komponenten die Unterscheidbarkeit verschiedener Ursachen positiv beeinflusst werden, wenn nicht nur der Füllstand (Druck) von Tanks, sondern auch die Füllstandsdifferenzen zu anderen Tanks beachtet werden.

Hierin unterscheidet sich die qualitative Modellierung gemäß dem erfindungsgemäßen Verfahren deutlich von einer Modellierung mit "normalen", d.h. quantitativen Zahlenwerten. Im letzteren Fall würde eine lineare Kombination von zusätzlichen Ausgangsgleichungen keine neuen Informationen liefern.

Bevorzugt wird in dem Datenspeicher zusätzlich eine Information darüber hinterlegt, wie groß eine Wahrscheinlichkeit dafür ist, dass eine bestimmte, zuvor ermittelte Ursache für die Anomalie (tatsächlich) ursächlich ist. Im Allgemeinen kann als Ergebnis des Verfahrens nicht nur eine mögliche Ursache für die Anomalie ermittelt worden sein, sondern eine Mehrzahl von Ursachen. Für diesen Fall können Kennzahlen definiert, mitausgegeben und ausgewertet werden, die angeben, wie hoch die Wahrscheinlichkeit ist, dass es sich bei der jeweiligen Ursache auch um die tatsächliche Ursache für die Anomalie handelt.

Dem linearen, stationären Modell kann wenigstens ein quantitativer Zusammenhang zwischen dem technischen Eingangsstrom in die wenigstens eine Komponente und dem technischen Ausgangsstrom aus der wenigstens einen Komponente hinzugefügt werden, um bei manchen Fallkonstellationen die Genauigkeit des Verfahrens zu erhöhen, ohne den Aufwand signifikant zu erhöhen.

Bei einer besonders bevorzugten Weiterbildung der Erfindung umfasst das qualitative Verhalten wenigstens vier Unterscheidungen:

- Ein Eingangsstrom mit einem bestimmten Vorzeichen bewirkt einen Ausgangsstrom, das dasselbe Vorzeichen aufweist (Symbol:↑),

- Ein Eingangsstrom mit einem bestimmten Vorzeichen bewirkt einen Ausgangsstrom, der ein invertiertes Vorzeichen aufweist (Symbol:↓),
- Ein Eingangsstrom hat keinen Einfluss auf den Ausgangsstrom (Symbol: o),
- Es ist nicht bekannt, ob bzw. welchen Einfluss der Eingangsstrom auf den Ausgangsstrom hat (Symbol: x).

Ein Zusammenhang zwischen dem Ausgangsstrom y und dem Eingangsstrom u kann damit mit dem qualitativen, stationären Übertragungsverhalten G folgendermaßen beschrieben werden:

$$y = G * u$$

mit

$$G = \begin{bmatrix} \uparrow & o & x \\ \downarrow & \downarrow & \uparrow \end{bmatrix}$$

Als Eingabe in das Verfahren sind Gleichungen zu geben, die das lineare Verhalten der einzelnen Komponenten der technischen Anlage qualitativ beschreiben. Die qualitativen Abhängigkeiten werden dabei durch die zuvor erläuterten symbolischen Parameter ausgedrückt, deren Wertebereich entsprechend angegeben wird. Einzelne Parameter können auch den Wert "unendlich" annehmen. Auf diese Weise können I-Anteile in Regler oder Strecke modelliert werden.

Wie bereits erwähnt, muss nicht jeder Zusammenhang qualitativ ausgedrückt werden. Ein Regler kann beispielsweise qualitativ mittels

$$u = k_R e, \qquad k_R > 0$$

charakterisiert werden (u: Ursache, e: Messgröße). Die Bestimmung einer Regelabweichung wird jedoch quantitativ mit

$$e = w - y$$

modelliert (e: Regelabweichung, w: Ursache, y: Messgröße). Die gemischte Modellierung von qualitativen und festen quantitativen Zusammenhängen gestaltet sich dahingehend als vorteilhaft, dass hierbei viele innere Zusammenhänge der Komponenten auch bei den Umformungen erhalten bleiben, die unabhängig von den tatsächlich unbekannten Parametern sind. Dies reduziert die Anzahl der am Ende enthaltenen X-Einträge (Zusammenhang zwischen Ursache und Symptom unbekannt) bzw. den Verzweigungen während der Ursachensuche wesentlich und gestaltet das gesamte Verfahren dadurch deutlich effizienter.

Die Ermittlung der Modellierung für die wenigstens eine Komponente kann wie folgt durchgeführt werden. In einem ersten Schritt werden die Gleichungen/Zusammenhänge von Komponenten und die von Kopplungen zwischen den Kopplungen in einem einzigen Gleichungssystem zusammengefasst. In diesem werden zunächst die Parameter mit dem Wert "unendlich" behandelt. Prinzipiell geschieht dies, indem die jeweiligen Zeilen, in denen ein solcher Parameter auftritt, durch diesen geteilt und dann ein Grenzübergang durchgeführt wird. Um die Größe des Gleichungssystems zu reduzieren, werden einfache Gleichungen der Art $0 = x_i + x_j$ und $0 = x_k$, also einfache 1:1-Beziehungen zwischen zwei Größen und feste Nullgrößen (aufgrund der linearen Modellierung kann einer Größe kein konstanter Wert außer Null zugewiesen werden), direkt berücksichtigt und aufgelöst.

Letztlich liegt dann ein Gleichungssystem der Form

$$0 = \begin{bmatrix} M_x & M_y & M_u \end{bmatrix} \begin{bmatrix} x \\ y \\ u \end{bmatrix}$$

vor, wobei u der Vektor der Eingangsgrößen (Eingangsströme) und y der Vektor der Messgrößen (Ausgangsströme) ist und alle weiteren "inneren" Größen aus der Modellierung in x zusammengefasst sind. Formal ergibt sich über

$$\begin{bmatrix} x \\ y \end{bmatrix} = [M_x \quad M_y]^{-1} M_U u$$

die Lösung

$$y = [0 \quad 1][M_x \quad M_y]^{-1} M_U u$$

bzw.

$$G = [0 \quad 1][M_x \quad M_y]^{-1} M_U$$

für das qualitative, stationäre Übertragungsverhalten bzw. die Übertragungsmatrix G. Dabei wird hier für G jedoch kein numerischer Ausdruck gesucht, sondern die Einträge in G sollen den zuvor beschriebenen qualitativen Werten ($\uparrow$, $\downarrow$, $\circ$, x) entsprechen.

Für kleine bis mittlere technische Anlagen (die Grenze hängt dabei stark von den inneren Zusammenhängen der Anlage ab) können diese Gleichungen symbolisch umgeformt werden. Dazu werden die Gleichungen in der Matrix-form

| $x_1$ | $x_2$ | $x_3$ | $y_1$ | $y_1$ | $u_1$ | $u_1$ |
|-------|-------|-------|-------|-------|-------|-------|
| * | * | * | * | * | * | * |
| * | * | * | * | * | * | * |
| * | * | * | * | * | * | * |
| * | * | * | * | * | * | * |
| * | * | * | * | * | * | * |

dargestellt. Dabei stellen alle *-Werte allgemeine Einträge dar, die entweder einer Zahl, einem Parameter oder auch einem Polynom in den Parametern entsprechen. Die meisten dieser Einträge sind jedoch 0, da die beschriebene Art der Modellierung auf sehr gering besetzte Matrizen führt. Durch elementare Matrixumformungen erhält man letztlich (wobei das symbolische Gleichungssystem im Grunde mit beliebigen Verfahren gelöst werden kann):

| $x_1$ | $x_2$ | $x_3$ | $y_1$ | $y_1$ | $u_1$ | $u_1$ |
|-------|-------|-------|-------|-------|-------|-------|
| * | * | * | * | * | * | * |
|  | * | * | * | * | * | * |
|  |  | * | * | * | * | * |
|  |  |  | ai |  | $b_{11}$ | $b_{12}$ |
|  |  |  |  | $a_2$ | $b_{21}$ | $b_{22}$ |

Bei diesen Umformungen wird auf Divisionen komplett verzichtet, so dass $a_i$ und $b_{ij}$ Polynome in den Parametern darstellen. Es ist nicht wesentlich, dass im linken Teil in den unteren Zeilen die Einheitsmatrix steht. Es ist allerdings ratsam, bei der Bestimmung der Faktoren in den einzelnen Schritten den größten gemeinsamen Teiler der betroffen Polynome zu berücksichtigen, und von Zeit zu Zeit auch gemeinsame Faktoren aus einer Zeile zu kürzen, damit die Anzahl der Summanden der Polynome nicht zu stark steigt.

Da lediglich die qualitative Abhängigkeit der $y_i$ von den $u_j$ interessiert, wird danach eine Definitheitsprüfung vorgenommen. Das bedeutet, dass festgestellt wird, ob das Vorzeichen der einzelnen Größen unabhängig von den Parameterwerten, unter Berücksichtigung der zulässigen Wertebereiche für die Parameter, ist. Definiert man die "Definitheitsfunktion" $[\![ \cdot ]\!]$ als

$[\![ \cdot ]\!] = \uparrow$, wenn x>0 für alle zulässigen Parameterwerte

$[\![ \cdot ]\!] = \downarrow$, wenn x<0 für alle zulässigen Parameterwerte

$[\![ \cdot ]\!] = o$, wenn x=0 für alle zulässigen Parameterwerte

$$\llbracket \cdot \rrbracket = X \text{ sonst,}$$

ergeben sich die Einträge $g_{ij}$ der gesuchten Matrix G über

$$g_{ij} = \downarrow \llbracket a_i \rrbracket \llbracket b_{ij} \rrbracket$$

mit den Rechenregeln

| · | ↑ | ↓ | ○ | x |
|---|---|---|---|---|
| ↑ | ↑ | ↓ | ○ | x |
| ↓ | ↓ | ↑ | ○ | x |
| ○ | ○ | ○ | ○ | ○ |
| x | x | x | ○ | x |

Es ist dabei darauf zu achten, dass jeweils Zähler und Nenner vor der Definitheitsprüfung keine gemeinsamen Teiler mehr besitzen, da diese das Ergebnis verfälschen, wenn der gemeinsame Teiler indefinit (x) ist, die übrigen Faktoren aber nicht.

Bei mittleren bis großen Systemen ist der symbolische Ansatz nicht mehr gangbar, da während der Umformungen Polynome mit zu vielen Gliedern entstehen, die zumindest in den Zwischenschritten nicht kürzbar sind. Dadurch nimmt der Zeit- und der Speicherbedarf exponentiell zu. Daher wird in diesen Fällen auf den im Folgenden beschriebenen heuristischen Ansatz zurückgegriffen.

1. Zuerst wird das Gleichungssystem numerisch für einen zufällig gewählten Parameterwert gelöst. Das Ergebnis wird mit $\underline{\underline{G'}}$ bezeichnet.

2. Danach werden anhand einer sich aus der Norm von $\underline{\underline{G'}}$ bestimmten Toleranzgrenze den Einträgen von $\underline{\underline{G'}}$ die qualitativen Werte ↑, ↑ oder o zugeordnet. Es ergibt sich so die Matrix G'.

3. In einer ersten Iteration wird G' als Lösungsmatrix G übernommen, G = G'. Ab der zweiten Iteration werden die Einträge von G' mit denen der Lösungsmatrix G verglichen. Unterscheiden sie sich, wird der entsprechende Eintrag in G durch x ersetzt,

$$g_{ij} := g_{ij} \text{ wenn } g_{ij} = g'_{ij}$$

$$g_{ij} := x \text{ wenn } g_{ij} \neq g'_{ij}$$

4. Die ersten drei Schritte werden wiederholt, bis eine festgelegte Anzahl an Iterationen erreicht ist.

Dabei kann die Anzahl der Iterationen fest vorgegeben oder über die Eigenschaften des Gleichungssystems (Dimension und Anzahl der symbolischen Parameter) abgeschätzt werden. Es ist auch denkbar, die Anzahl der Iterationen während der Durchführung des Algorithmus anhand der Verteilungen der in einem Schritt neu erkannten x-Einträge dynamisch über stochastische Betrachtungen abzuschätzen.

Bei diesem Ansatz ist zwar nicht garantiert, dass alle x-Einträge tatsächlich auch gefunden werden, so dass in der Lösungsmatrix G auch falsche Einträge stehen können. Jedoch lässt sich über eine entsprechend große Anzahl an Iterationen die Wahrscheinlichkeit dafür minimieren. Darüber hinaus kann in der Analyse beachtet werden, dass möglicherweise noch (wenige) Falscheinträge vorhanden sein können.

Die Parameterwerte werden in den einzelnen Iterationen stochastisch gewählt. Für positive Parameter kann dabei z.B. eine Gleichverteilung im Intervall [0,001, 10,001] gewählt werden, für negative Parameter eine Gleichverteilung im Intervall [-10,001, -0,0011]. Sind für die Parameter spezifische Intervalle bekannt, können auch diese verwendet werden. In diesem Fall ist es dann auch möglich, dass die Heuristik Einträge als "praktisch definit" erkennt, die bei der symbolischen Betrachtung als indefinit erkannt werden. In diesen Fällen liefert die Heuristik damit die im Hinblick auf die Analyse besseren Werte.

Aus der ermittelten Übertragungsmatrix G und einer qualitativen Messung des Ausgangsstroms aus den Komponenten können die möglichen Ursachen für das Auftreten einer Anomalie bestimmt werden. Es ist bei der Analyse sinnvoll davon auszugehen, dass eine Ursache entweder null oder positiv ist. Für viele Ursachen ist dies prinzipbedingt der Fall, und dies reduziert die Anzahl der als möglich erkannten Ursachen deutlich. Ursachen, die positiv oder negativ sein können, können dann entweder gesondert betrachtet oder in zwei positive Ursachen aufgespalten werden, indem die betreffende Spalte in G dupliziert und negiert wird.

Bei der Analyse ist Folgendes zu berücksichtigen:

- Die qualitative Betrachtung sagt nichts darüber aus, wie groß (betragsmäßig) die Verstärkung zwischen einem Ein- und einem Ausgang ist, wenn der Wert "↑" oder "↓" ist. Die Verstärkung kann so klein sein, dass eine Änderung praktisch nicht erkannt wird und der Eintrag daher eher als "○" anzusehen wäre.
- Wenn die qualitative Übertragungsmatrix heuristisch bestimmt wurde, könnten dort falsche Einträge vorhanden sein.
- Die Erkennung der Symptome könnte ebenfalls fehlerhaft sein.

Für die Beurteilung der ermittelten Ursachen lassen sich beispielsweise für einen effizienteren Umgang mit den identifizierten Lösungen die folgenden Kenngrößen definieren ($\tilde{y}_i$ sind dabei Messwerte):

- Anzahl der möglichen Vergleiche (Anzahl der von x verschiedenen Einträge der j-ten Spalte von G)

$$m_j = \left|\left\{i \,|\, g_{ij} \in \{\uparrow, \downarrow, o\}\right\}\right|$$

- Anzahl der sicheren Übereinstimmungen

$$n_{D,j} = \left|\left\{i \,|\, g_{ij} \neq x, g_{ij} = \tilde{y}_i\right\}\right|$$

- Anzahl der sicheren Widersprüche

$$\bar{n}_{D,j} = \left|\left\{i \,|\, g_{ij} \neq x, g_{ij} \neq \tilde{y}_i\right\}\right|$$

- Differenz der sicheren Übereinstimmungen und sicheren Widersprüche

$$\Delta n_{D,j} = n_{D,j} - \bar{n}_{D,j}$$

Analog zu $\Delta n_{D,j}$, $\bar{n}_{D,j}$ und $n_{D,j}$ lassen sich auch Kenngrößen definieren, bei denen bei einem Eintrag $g_{ij} = \uparrow$ bzw. ↓ auch Messungen $\tilde{y}_i = o$ als widerspruchsfrei akzeptiert werden.

Auf gleiche Art und Weise können auch Kombinationen von Ursachen als mögliche Ursache zu einer gegebenen Messung geprüft werden. Hierzu wird anstelle des Spaltenvektors $g_j$ der Matrix G zu einer einzelnen Ursache die Summe der Spaltenvektoren betrachtet, die der zu betrachteten Kombination entsprechen. Werden die Indizes der einzelnen Ursachen einer Kombination in der Indexmenge $J_k$ zusammengefasst, kann dies folgendermaßen ausgedrückt werden:

$$g_{J_k} = \sum_{j \in J_k} g_j$$

Dabei gelten bezüglich der Addition die folgenden Regeln:

| + | ↑ | ↓ | ○ | x |
|---|---|---|---|---|
| ↑ | ↑ | x | ↑ | x |
| ↓ | x | ↓ | ↓ | x |
| ○ | ↑ | ↓ | ○ | x |

(fortgesetzt)

| + | ↑ | ↓ | ○ | x |
|---|---|---|---|---|
| x | x | x | x | x |

Für eine gegebene Messung werden die oben beschriebenen Maße für alle einzelnen Ursachen und alle Kombinationen von Ursachen bis zu einer maximalen Anzahl von "Kombinationslängen" berechnet. Die betrachteten Ursachen(-kombinationen) werden dann anhand der berechneten Kenngrößen nach verschiedenen Kriterien sortiert und tabellarisch dargestellt. Um die Anzeige der Ergebnisse übersichtlicher zu gestalten, können noch alle Einträge der Ergebnistabelle entfernt werden, deren Kenngrößen gewisse Grenzwerte nicht erreichen. Darüber hinaus können noch alle Einträge zu Ursachenkombinationen entfernt werden, die keine besseren Werte erreichen als die in dieser Kombination enthaltenen kürzeren Kombinationen.

Wenn die Ursachenkombination J = {1,2,3,4} einen Wert von $\Delta n_{D,j}$ = 6 erreicht und die Kombination J = {2, 3, 4} ebenfalls einen Wert von $\Delta n_{D,j}$ = 6 erreicht, wird die längere Kombination {1, 2, 3, 4} nicht mehr ausgegeben. Je nach Art der Kenngröße kann es dabei auch sinnvoll sein, zu fordern, dass die längere Kombination um einen bestimmten Faktor besser als die enthaltenen kürzeren Kombinationen sein muss.

Die obige Aufgabe wird zudem gelöst durch ein Computerprogramm mit durch einen Computer ausführbaren Programmcodeanweisungen zur Implementierung des zuvor erläuterten Verfahrens. Zudem wird die Aufgabe gelöst durch ein Speichermedium mit einem durch einen Computer ausführbaren, zuvor erläuterten Computerprogramm und ein Computersystem, auf dem ein Computerprogramm wie zuvor erläutert implementiert ist.

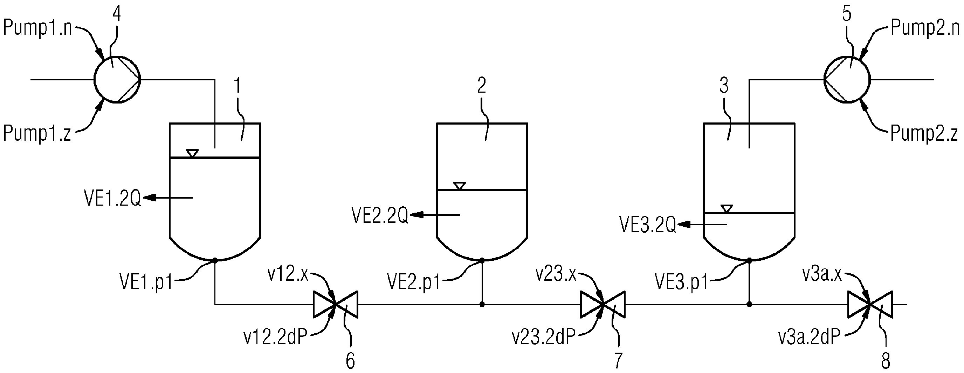

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein realer Dreitankprüfstand einer technischen Anlage schematisch dargestellt. Der Dreitankprüfstand weist einen ersten Tank 1, einen zweiten Tank 2 und einen dritten Tank 3 auf. An den beiden äußeren Tanks 1, 3 in der Figur sind eine erste Pumpe 4 bzw. eine zweite Pumpe 5 angeschlossen, die über ein Steigrohr (nicht dargestellt), d. h. mit konstantem Gegendruck, Wasser in den jeweiligen Tank 1, 3 pumpen können.

Der erste Tank 1 ist mit dem zweiten Tank 2 mittels eines ersten Ventils 6 verbunden. Der zweite Tank 2 ist mit dem dritten Tank 3 mittels eines zweiten Ventils 7 verbunden. Der dritte Tank 3 ist mittels eines dritten Ventils 8 mit weiteren, nicht dargestellten Komponente verbunden. Die Füllhöhen des Wassers in den drei Tanks 1, 2, 3 nehmen von dem ersten Tank 1 nach rechts zu dem dritten Tank 3 hin in der Figur ab. Es ergibt sich folgender qualitativer Zusammenhang zwischen den einzelnen Tanks 1, 2, 3:

| | VE1.zQ Pump1.z | VE2.zQ | VE3. zQ Pump2.z V3a.x | Pump1.n | Pump2.n V3a.zdP | V12.x | V12.zdP | V23.x | V23.zdP |
|---|---|---|---|---|---|---|---|---|---|
| VE1.p1 | ↓ | ↓ | ↓ | ↑ | ↑ | ↓ | ↑ | ↓ | ↑ |
| VE2.p1 | ↓ | ↓ | ↓ | ↑ | ↑ | ○ | ○ | ↓ | ↑ |
| VE3.p1 | ↓ | ↓ | ↓ | ↑ | ↑ | ○ | ○ | ○ | ○ |
| yD12 | ↓ | ○ | ○ | ↑ | ○ | ↓ | ↑ | ○ | ○ |
| yD13 | ↓ | ↓ | ○ | ↑ | ○ | ↓ | ↑ | ↓ | ↑ |
| yD23 | ↓ | ↓ | ○ | ↑ | ○ | ○ | ○ | ↓ | ↑ |

In der ersten Spalte der Tabelle sind Ausgangsgrößen (Ausgangsströme) als Symptome und in der ersten Zeile Eingangsgrößen (Eingangsströme) als Ursachen abgebildet. Die Ausgangsgrößen sind folgendermaßen definiert:

VE1.p1  Druck am Boden des ersten Tanks 1
VE2.p1  Druck am Boden des zweiten Tanks 2
VE3.p1  Druck am Boden des dritten Tanks 3

$$yD12 = VE1.p1 - VE2.p1$$

$$yD13 = VE1.p1 - VE3.p1$$

$$yD23 = VE2.p1 - VE3.p1$$

Die Eingangsgrößen sind folgendermaßen definiert:

| | |
|---|---|
| VE1.zQ | Leckage aus dem ersten Tank 1 |
| VE2.zQ | Leckage aus dem zweiten Tank 2 |
| VE3.zQ | Leckage aus dem dritten Tank 3 |
| Pump1.z | Leistungsreduktion der ersten Pumpe 4 |
| Pump2.z | Leistungsreduktion der zweiten Pumpe 5 |
| Pump1.n | Erhöhung der Drehzahl der ersten Pumpe 4 |
| Pump2.n | Erhöhung der Drehzahl der zweiten Pumpe 5 |
| v12.x | Ventilstellung des ersten Ventils 6 |
| v23.x | Ventilstellung des zweiten Ventils 7 |
| v3a.x | Ventilstellung des dritten Ventils 8 |
| v12.zdP | Verstopfung des ersten Ventils 6 |
| v23.zdP | Verstopfung des zweiten Ventils 7 |
| v3a.zdP | Verstopfung des dritten Ventils 8 |

In der Tabelle sind Eingangsgrößen, die denselben qualitativen Zusammenhang mit bestimmten Ausgangsgrößen haben, jeweils in einer Spalte zusammengefasst, um die Lesbarkeit der Tabelle zu erhöhen.
"VE1.zQ" stellt eine beispielhafte Ursache dar und bedeutet, dass im ersten Tank 1 eine Leckage aufgetreten ist. Damit sinkt der Füllstand aller drei Tanks 1, 2, 3, da der Druck am Boden der Tanks 1, 2, 3 sinkt. Die drei Zellenelemente sind deshalb mit der qualitativen Aussage "↓" befüllt. Da die erste Pumpe 4 die gleiche Menge fördert wie bisher, im ersten Tank 1 aber ein Teil davon verloren geht, reduziert sich auch der Durchfluss durch das erste Ventil 6, das zweite Ventil 7 und das dritte Ventil 8, sodass auch die Differenzdrücke yD12, yD13 und yD23 kleiner werden müssen.
"Pump2.n" stellt eine weitere beispielhafte Ursache dar und bedeutet, dass die zweite Pumpe 5 mit einer höheren Drehzahl betrieben wird. Damit steigt der Füllstand aller drei Tanks 1, 2, 3 bzw. der jeweilige Druck am Boden, da mehr Wasser in den Dreitankprüfstand gelangt. Die drei Zellenelemente sind deshalb mit der qualitativen Aussage "↑" befüllt. Da die erste Pumpe 4 weiterhin die gleiche Wassermenge liefert, fließt auch durch das erste Ventil 6, das zweite Ventil 7 und das dritte Ventil 8 die gleiche Menge Wasser, sodass die Druckdifferenzen yd12, yD13, yD23 unverändert bleiben (Symbol: ○).
Anhand dieses Beispiels wird ersichtlich, dass die Hinzunahme zusätzlicher Parameter wie hier der Druckdifferenzen positiv auf die Ermittlung originären Ursache für das Auftreten einer Anomalie wirken kann.
Mit dem Dreitankprüfstand wurden Messungen durchgeführt, indem verschiedene Phasen konstanter Störungen aufgebracht wurden:

Phase 1: keine Ursache
Phase 2: Pump1.n
Phase 3: v23.zdP
Phase 4: v23.zdP + v3a.zdP
Phase 5: v3a.zdP
Phase 6: VE2.zQ
Phase 7: keine Ursache

Aus den gemessenen Verläufen wurden - in diesem Fall in allen Fällen korrekt - die qualitativen Abweichungen vom Normalzustand (Phase 1 und Phase 7) ermittelt.
Im Folgenden sind die Ergebnisse der Analyse, hier mit den Kenngrößen $\Delta n_{D,j}$ (als DnD *bezeichnet*), $\bar{n}_{D,j}$ (als *nnD bezeichnet*) und m für die sieben Phasen dargestellt. Dabei wurden alle Kombinationen von bis zu vier Ursachen berücksichtigt. (Die Spalte g stellt jeweils den (kombinierten) Spaltenvektor $g_{Jk}$ dar. Die Ursache 0 entspricht dem Test auf den störungsfreien Fall. Geklammerte Ursachen sind nicht unterscheidbar, mit "+" verbundene Ursachen stellen Kombinationen dar.)
Es zeigt sich, dass in allen Fällen die tatsächlich eingebrachte Ursache unter den als möglich erkannten und ausgegebenen Ursachen liegt, und auch als erste Möglichkeit (d.h. mit der höchsten Kennziffer 1) angeboten wird.

Phase 1

| Wahrscheinlichkeit | DnD | nnD | m | Mögliche Ursachen | g |
|---|---|---|---|---|---|
| 1 | 6 | 0 | 6 | 0 | 0 0 0 0 0 0 |

Phase 2

| Wahrscheinlichkeit | DnD | nnD | m | Mögliche Ursachen | g |
|---|---|---|---|---|---|
| 1 | 6 | 0 | 6 | Pump1.n | ↑↑↑↑↑↑ |
| 2 | 6 | 0 | 6 | (Pump2.n, v3a.zdP) + v12.zdP + v23.zdP | ↑↑↑↑↑↑ |
| 3 | 4 | 1 | 6 | (Pump2.n, v3a.zdP) + v12.zdP | ↑↑↑↑↑o |
| 4 | 4 | 1 | 6 | (Pump2.n, v3a.zdP) + v23.zdP | ↑↑↑o↑↑ |
| 5 | 4 | 1 | 6 | v12.zdP + v23.zdP | ↑↑o↑↑↑ |
| 6 | 2 | 2 | 6 | V23.zdP | ↑↑oo↑↑ |

Phase 3

| Wahrscheinlichkeit | DnD | nnD | m | Mögliche Ursachen | g |
|---|---|---|---|---|---|
| 1 | 6 | 0 | 6 | v23.zdP | 1 1 o o 1 1 |
| 2 | 2 | 2 | 6 | Pump1.n | ↑↑↑↑↑↑ |

Phase 4

| Wahrscheinlichkeit | DnD | nnD | m | Mögliche Ursachen | g |
|---|---|---|---|---|---|
| 1 | 6 | 0 | 6 | (Pump2.n, v3a.zdP) + v23.zdP | ↑↑↑o↑↑ |
| 2 | 4 | 1 | 6 | Pump1.n | ↑↑↑↑↑↑ |
| 3 | 4 | 1 | 6 | v23.zdP | ↑↑oo↑↑ |
| 4 | 2 | 2 | 6 | Pump2.n, v3a.zdP | ↑↑↑ooo |

Phase 5

| Wahrscheinlichkeit | DnD | nnD | m | Mögliche Ursachen | g |
|---|---|---|---|---|---|
| 1 | 6 | 0 | 6 | Pump2.n, v3a.zdP | ↑↑↑ooo |
| 2 | 1 | 1 | 3 | Pump1.n + v12.x | x 1 1 x x ↑ |

Phase 6

| Wahrscheinlichkeit | DnD | nnD | m | Mögliche Ursachen | g |
|---|---|---|---|---|---|
| 1 | 6 | 0 | 6 | VE2.zQ | ↓↓↓o↓↓ |
| 2 | 6 | 0 | 6 | (VE3.zQ, Pump2.z, v3a.x) + v23.x | ↓↓↓o↓↓ |
| 3 | 4 | 1 | 6 | VE1.zQ, Pump1.z | ↓↓↓↓↓↓ |
| 4 | 4 | 1 | 6 | V23.x | ↓↓oo↓↓ |
| 5 | 2 | 2 | 6 | VE3.zQ, Pump2.z, v3a.x | ↓↓↓ooo |

Phase 7

| Wahrscheinlichkeit | DnD | nnD | m | Mögliche Ursachen | g |
|---|---|---|---|---|---|
| 1 | 6 | 0 | 6 | 0 | 0 0 0 0 0 0 |

Obwohl die Erfindung im Detail durch das bevorzugte Ausführungsbeispiel näher illustriert und beschrieben wurde, so ist die Erfindung nicht auf das offenbarte Beispiel eingeschränkt und andere Variationen können vom Fachmann hieraus abgeleitet werden, ohne den Schutzumfang der Erfindung zu verlassen.

**Patentansprüche**

1.  Verfahren zur Ermittlung einer Ursache für eine Anomalie beim Betrieb einer technischen Anlage, insbesondere Fertigungs- oder Prozessanlage, umfassend:

    a) Bestimmen eines linearen, stationären Modells für wenigstens eine Komponente (1, 2, 3, 4, 5, 6, 7, 8) der technischen Anlage anhand eines topologischen Aufbaus der technischen Anlage, wobei das Modell ein qualitatives Verhalten der Komponente (1, 2, 3, 4, 5, 6, 7, 8) abbildet, derart, dass das Modell eine qualitative Aussage über einen technischen Antwortstrom der Komponente (1, 2, 3, 4, 5, 6, 7, 8) in Reaktion auf einen bestimmten technischen Eingangsstrom, mit dem die Komponente (1, 2, 3, 4, 5, 6, 7, 8) beaufschlagt wird, umfasst,
    b) Betreiben der wenigstens einen Komponente (1, 2, 3, 4, 5, 6, 7, 8) der technischen Anlage und Beaufschlagen der Komponente (1, 2, 3, 4, 5, 6, 7, 8) mit einem technischen Eingangsstrom,
    c) Empfangen des Antwortstroms und Hinterlegen des Antwortstroms in einem Datenspeicher,
    d) Auswerten des in dem Datenspeicher hinterlegten Antwortstroms der Komponente (1, 2, 3, 4, 5, 6, 7, 8),
    e) Feststellen einer Anomalie des Antwortstroms der Komponente (1, 2, 3, 4, 5, 6, 7, 8),
    f) Ermitteln von möglichen Ursachen für die Anomalie aus einer Verknüpfung der Anomalie mit dem zuvor bestimmten Modell der Komponente (1, 2, 3, 4, 5, 6, 7, 8),
    g) Hinterlegen der möglichen Ursachen in dem Datenspeicher.

2.  Verfahren nach Anspruch 1, bei dem in dem Datenspeicher zusätzlich eine Information darüber hinterlegt wird, wie groß eine Wahrscheinlichkeit dafür ist, dass eine bestimmte, zuvor ermittelte Ursache für die Anomalie ursächlich ist.

3.  Verfahren nach Anspruch 2, bei dem Kenngrößen definiert und ausgewertet werden, um eine Aussage darüber treffen zu können, welche bestimmte, zuvor ermittelte Ursache für die Anomalie ursächlich ist.

4.  Verfahren nach einem der vorangegangen Ansprüche, bei dem dem linearen, stationären Modell wenigstens ein quantitativer Zusammenhang zwischen dem technischen Eingangsstrom in die wenigstens eine Komponente (1, 2, 3, 4, 5, 6, 7, 8) und dem technischen Ausgangsstrom aus der wenigstens einen Komponente (1, 2, 3, 4, 5, 6, 7, 8) hinzugefügt wird.

5.  Verfahren nach einem der vorangegangenen Ansprüche, bei dem das qualitatives Verhalten wenigstens vier Unterscheidungen umfasst:

    - Ein Eingangsstrom mit einem bestimmten Vorzeichen bewirkt einen Ausgangsstrom, das dasselbe Vorzeichen aufweist,
    - Ein Eingangsstrom mit einem bestimmten Vorzeichen bewirkt einen Ausgangsstrom, der ein invertiertes Vorzeichen aufweist,
    - Ein Eingangsstrom hat keinen Einfluss auf den Ausgangsstrom,
    - Es ist nicht bekannt, ob der Eingangsstrom einen Einfluss auf den Ausgangsstrom hat.

6.  Computerprogramm mit durch einen Computer ausführbaren Programmcodeanweisungen zur Implementierung des Verfahrens nach einem der Ansprüche 1 bis 5.

7.  Speichermedium mit einem durch einen Computer ausführbaren Computerprogramm gemäß Anspruch 6.

**8.** Computersystem, auf dem ein Computerprogramm nach Anspruch 6 implementiert ist.

**Europäisches Patentamt**
**European Patent Office**
**Office européen des brevets**

# EUROPÄISCHER RECHERCHENBERICHT

Nummer der Anmeldung

EP 20 16 8298

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/072942 A1 (PARK JEE HUN [KR] ET AL) 7. März 2019 (2019-03-07) <br> * Zusammenfassung * <br> * Absatz [0002] - Absatz [0027] * <br> * Absatz [0044] - Absatz [0091] * <br> * Ansprüche 1-17 * <br> * Abbildungen 1-7 * <br> ----- | 1-8 | INV. <br> G05B23/02 <br> H04L12/24 |
| A | EP 3 379 360 A2 (HITACHI LTD [JP]) 26. September 2018 (2018-09-26) <br> * Zusammenfassung * <br> * Absatz [0002] - Absatz [0012] * <br> * Absatz [0015] - Absatz [0133] * <br> * Ansprüche 1-13 * <br> * Abbildungen 1-18 * <br> ----- | 1-8 | |
| A | US 2019/199743 A1 (LA MARCA ANTONIO [DE] ET AL) 27. Juni 2019 (2019-06-27) <br> * Zusammenfassung * <br> * Absatz [0001] - Absatz [0031] * <br> * Absatz [0037] - Absatz [0056] * <br> * Ansprüche 1-14 * <br> * Abbildungen 1-4 * <br> ----- | 1-8 | RECHERCHIERTE SACHGEBIETE (IPC) <br><br> G05B <br> H04L |
| A | DE 10 2017 213119 A1 (BOSCH GMBH ROBERT [DE]) 31. Januar 2019 (2019-01-31) <br> * Zusammenfassung * <br> * Absatz [0001] - Absatz [0031] * <br> * Absatz [0034] - Absatz [0064] * <br> * Ansprüche 1-11 * <br> * Abbildungen 1-5 * <br> ----- | 1-8 | |

Der vorliegende Recherchenbericht wurde für alle Patentansprüche erstellt

| Recherchenort | Abschlußdatum der Recherche | Prüfer |
|---|---|---|
| München | 1. September 2020 | Schrembs, Gerd |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 8298

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-09-2020

| Im Recherchenbericht angeführtes Patentdokument | Datum der Veröffentlichung | Mitglied(er) der Patentfamilie | Datum der Veröffentlichung |
|---|---|---|---|
| US 2019072942 A1 | 07-03-2019 | DE 102018116696 A1<br>KR 20190025474 A<br>US 2019072942 A1 | 07-03-2019<br>11-03-2019<br>07-03-2019 |
| EP 3379360 A2 | 26-09-2018 | CN 108628281 A<br>EP 3379360 A2<br>JP 2018160093 A<br>US 2018275642 A1 | 09-10-2018<br>26-09-2018<br>11-10-2018<br>27-09-2018 |
| US 2019199743 A1 | 27-06-2019 | CN 110022291 A<br>DE 102017223751 A1<br>US 2019199743 A1 | 16-07-2019<br>27-06-2019<br>27-06-2019 |
| DE 102017213119 A1 | 31-01-2019 | CN 110915189 A<br>DE 102017213119 A1<br>EP 3662639 A1<br>US 2020236005 A1<br>WO 2019025217 A1 | 24-03-2020<br>31-01-2019<br>10-06-2020<br>23-07-2020<br>07-02-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2568348 A1
- EP 2587328 A1
- EP 2587329 A1

**In der Beschreibung aufgeführte Nicht-Patentliteratur**

- **VENKAT VENKATASUBRAMANIAN ; RAGHU-NATHAN RENGASWAMY ; KEWEN YIN ; SURYA N. KAVURI.** A review of process fault detection and diagnosis Part I: Quantitative model-based methods. *Computers and Chemical Engineering,* 2003, vol. 27, 293-31t

- **VENKAT VENKATASUBRAMANIAN ; RAGHU-NATHAN RENGASWAMY ; SURYA N. KAVURI.** A review of process fault detection and diagnosis Part II: Qualitative Models and Search Strategies. *Computers and Chemical Engineering,* 2003, vol. 27, 313-326